# EUROPEAN PATENT SPECIFICATION

(11) **EP 2 653 040 B1**
(45) Date of publication and mention of the grant of the patent: **29.06.2016**
(21) Application number: 13164605.1
(22) Date of filing: 19.04.2013
(51) Int. Cl.: A23L 33/00

(54) **FOOD BASED ON DONKEY FORTIFIED MILK FOR PRETERM INFANTS AND/OR TERM INFANTS WITH ALLERGY OR INTOLLERANCE TO COW'S MILK PROTEINS AND METHOD OF PREPARATION THEREOF**
NAHRUNGSMITTEL AUF BASIS VON ESELSMILCH FÜR FRÜHGEBORENE UND/ODER REIFGEBORENE SÄUGLINGE MIT ALLERGIE ODER INTOLERANZ GEGENÜBER KUHMILCHPROTEINEN, UND VERFAHREN ZUR HERSTELLUNG DAVON
PRODUIT ALIMENTAIRE A BASE DE LAIT D'ANESSE ENRICHI POUR DES ENFANTS PREMATURES ET/OU A TERME AYANT UNE ALLERGIE OU UNE INTOLERANCE AUX PROTEINS DE LAIT DE VACHE ET PROCEDE POUR SA PREPARATION

(30) Priority: 19.04.2012 IT RM20120170
(43) Date of publication of application: 23.10.2013
(73) Proprietor: Dicofarm Spa, 00138 Roma (IT)
(72) Inventor: Acri, Maurizio, 00138 Roma (IT)
(74) Representative: Sarpi, Maurizio

(56) References cited:
- WO-A1-2010/119439
- FR-A1- 2 939 044
- SWAR M O.: "Donkey milk-based formula: A substitute for patients with cow's milk protein allergy", SUDANESE JOURNAL OF PAEDIATRICS , vol. 11, no. 2 2011, pages 21-24, XP002689758, Retrieved from the Internet: URL:http://www.sudanjp.org/uploads/9/2/7/0 /9270568/donkey_milk-based_formula_a_subst itute_for_patients_with_cows_milk_protein_ allergy.pdf [retrieved on 2013-01-07]
- H. Y. GUO, K. PANG, X. Y. ZHANG, L. ZHAO, S. W. CHEN, M. L. DONG, AND F. Z. REN: "Composition, Physiochemical Properties, Nitrogen Fraction Distribution, and Amino Acid Profile of Donkey Milk", J. DAIRY SCI. , vol. 90 11 December 2006 (2006-12-11), pages 1635-1643, XP002689759, DOI: 10.3168/jds.2006-600 Retrieved from the Internet: URL:http://ac.els-cdn.com/S002203020771649 1/1-s2.0-S0022030207716491-main.pdf?_tid=c ca25dbc-58da-11e2-864c-00000aacb361&acdnat =1357570933_0e4dd960d0da5d5a5842b6a4d6119f 98 [retrieved on 2013-01-07]
- AKBAR NIKKHAH: "Equidae milk promises substitutes for cow and human breast milk", TURK. J. VET. ANIM. SCI. , vol. 36, no. 5 11 October 2011 (2011-10-11), pages 470-475, XP002689760, DOI: 10.3906/vet-1105-10 Retrieved from the Internet: URL:http://journals.tubitak.gov.tr/veterin ary/issues/vet-12-36-5/vet-36-5-2-1105-10. pdf [retrieved on 2013-01-07]

## Description

### Field of application

In its most general aspect, the present invention relates to infant food, follow-on foods, foods for special medical purposes, nutraceutics, dietary supplements and medical devices made from donkey milk fortified for preterm infants, low weight and full-term infants with or at risk of intolerance or allergy to cow's or other source milk protein except donkey milk. Pior art

Cow's milk protein allergy (CMA) is certainly the most common and well-known food allergy that occurs mainly in childhood. The functional immaturity of both gastrointestinal system and immune system in early life, and the increase in the percentage of infants who cannot be breastfed are fed by formulas based on cow's milk, determine that milk allergy appears in children in percentages varying between 2 and 7% (Sampson et al. 2004). In addition, up to 7% of infants suffer for the so-called intolerance to cow's milk protein (CMI), which is the most common form of immunological food intolerance in childhood.

Among the main events of CMI and CMA there are symptoms of varying severity, which may involve skin (atopic dermatitis, hives/angioedema, rashes), gastrointestinal tract (growth failure, severe gastro-esophageal reflux, chronic diarrhea, persistent constipation, malabsorption syndromes, recurrent vomiting, enterocolitis, anoproctite) or anaphylactic reactions potentially life-threatening (glottis edema, hypotension up to shock, tight asthma, acute skin and gastrointestinal symptoms). In most cases histopathological lesions of the intestinal mucosa are found very similar to the typical ones of celiac disease (intestinal villous atrophy of various degrees), anatomo-pathologic index of the malabsorption condition. The intensity and the number of symptoms is variable over time, not only from subject to subject, but also in the individual patient.

The milk proteins are classified into caseins and whey proteins, respectively constituting 80 and 20%, of the total cows' milk proteins. Since beta-lactoglobulin is absent in woman milk, in the past it was believed that this protein represented the major allergen of cow's milk. By the time it has been shown instead that caseins are major allergens and often phenomena of cosensitization occur. In practice, many subjects allergic to cow's milk are responsive to more than one protein.

A diet excluding allergenic food and replacement with other hypoallergenic aliments represents the treatment of choice of food allergies. The rational of therapy is the complete elimination of cow's milk protein from children diet.

In the first two years of life, when breast-feeding is not available, cow's milk, pasteurized or in adapted formulation, and its derivatives, are the foods meeting all or at least half of child energy and nutrition needs, and they are also the main source of dietary calcium, whose demand is very high in this age. It is therefore clear that it is not possible to prescribe an elimination diet of cow's milk and its derivatives without having substitute food.

Currently, substitutes for cow's milk most frequently used in infants suffering for allergy or intolerance to cow's milk proteins are formulations based on soy isolated proteins, protein hydrolysates, formulations based on rice and milk from animal species different than bovine (Host et al., 2004).

Ideally, the food substitute should be hypo-allergenic or anallergic, not cross-reactive with cow's milk protein, nutritionally adequate and palatable. However, the treatments currently in use do not always achieve the desired results due to "side effects": poor compliance for the unpleasant taste, high operating costs, persisting risk of severe allergic reactions toward food apparently considered "safe".

The hydrolyzed formulations (HF) are used for the treatment and the prevention of allergy to cow's milk proteins. The hydrolyzed formulations differ each other for at least 5 features:
1) level of hydrolysis: partial hydrolysates (pHF) and enhanched (eHF);
2) type of used hydrolysis: enzymatic, heat, ultrafiltration;
3) protein source: casein, whey protein, soy, rice;
4) presence/absence of lactose: possible relevance for the calcium absorption, galactocerebrosides formation, development of the intestinal flora).

The hydrolysis level, hence the molecular weight of the peptide residues, is considered fundamental for the therapeutic response to CMA. Peptides of molecular weight (MW) lower than 1500 daltons very rarely are immunogenic, peptides with MW lower than 3500 daltons hardly allow binding between two molecules of IgE on mast cells and the subsequent immediate reaction, while peptides with MW greater than 6000 dalton are considered potentially allergenic (Cantani et al. 2000).

In pHF or hypoallergenic formulas (HA = hypoallergenic) the present peptides are intermediate in size between those of the adapted formulas and those of the so-called enhanced hydrolysates. In all peptides having MW greater than 6000 daltons are present. The content of the major allergen of the milk, the beta-lactoglobulin, is about 300 times lower than that of cow's milk and adapted formulas, although in average 10,000 times higher than the content of the enhanced hydrolysates. The residue antigenic power, namely the ability to cause an allergic reaction in subjects with CMA, is intermediate with respect to the adapted formulas and to enhanced hydrolysates.

The use of such formulas is suitable only to provide a possible benefit in the prevention of atopy in high-risk individuals.

Enhanced or extensive hydrolysates (eHF), characterized by the presence of peptides mostly less than 1500 daltons, are the only truly hypoallergenic formulas (i.e. tolerated by 90% of infants with IgE-mediated CMA, with 95% confidence interval) recommended as the first choice for the treatment of CMA by the European Society for Paediatric Allergology and Clinical Immunology (ESPACI), the European Society for Paediatric Gastroenterology, Hepatology and Nutrition (ESPGHAN) (Høst et al.1999) and the American Academy of Pediatrics (AAP) (AAP 2000), although the possibility of allergic reactions, even severe, is not excluded, albeit in very small percentage; however, the enhanced hydrolysates are poorly palatable.

The formulas of free amino acids (AAF) are considered the only formulas, by definition, non-allergenic. In fact, the amino acid mixtures constituting them are not able to trigger any type of allergic reaction, either immediate-type, or delayed. These mixtures additionally contain glucose syrup or maltodextrins, vegetable oils and fats, minerals and vitamins; they are devoid of cow's milk proteins as well lactose, sucrose and soy, but their use is hindered, especially, by their unpleasant taste and very high cost. Nutritional studies carried out on eHF and AAF have produced contradictory results. In fact, there are few data regarding the "biochemistry" tolerability of these formulas, in particular the indices of protein metabolism and nitrogen balance.

Other therapies include the use of formulas based on soy isolated proteins (SF), subject-matter of endless debates and discussions over the years, especially for the risk of sensitization to its protein. Such sensitization phenomenon occurs at a rate ranging from 8% to 14% of children with IgE-mediated CMA. Generally formulas based on soy proteins are not recommended for the initial treatment of infants with CMA, wherein allergy to soy proteins has been reported with a frequency between 17% and 47%. Furthermore, the SF are not recommended in prematures or for the use in the treatment of infants with non-IgE-mediated CMA, with predominantly gastrointestinal symptoms. Their allergenic power is due to the presence of beta conglycinine and glycine and P34. However, if tolerated, they represent an effective alternative to cow's milk, because they are valid from the nutritional point of view and may be used in the forms IgE mediated especially in infants of more than 6 months with cutaneous manifestations.

The formulas for infants based on rice hydrolysed proteins are lactose-free, contain glucose syrup, maltodextrin, corn starch, MCT, vegetable oils, linoleic acid and linolenic acid (ratio 10:1), nucleotides, selenium, lysine, threonine, taurine, choline and carnitine. Their use is very recent therefore at the time data for long-term use are not available.

In recent years, in alternative to the SF and the eHF, a strong interest in the milk of other mammalian species for infants and children with CMA has emerged. However, some of them, in particular goat and sheep milk, have shown a high cross-reactivity with cow's milk protein, both *in vivo* and *in vitro.* Some studies in very responsive to bovine caseins subjects have revealed the presence of circulating IgE able to recognize proteins from buffalo, goat and sheep milk, while much lower appears the responsiveness to milk protein of donkey and horse (Businco et al.2000). Moreover, from a nutritional point of view, goat's milk is deficient in some key factors such as folic acid, vitamins B6 and B12, and iron, and finally, its high content of protein and minerals, especially calcium, phosphorus, sodium and potassium, involves excessive solute load for the infant kidney.

Donkey milk seems to be more promising, being more similar in composition to human milk than cow's milk, as it is tolerated in some children with severe IgE-mediated CMA. Its availability, however, is limited and retrieval is difficult. Anyway, it has been tested in only a single study.

Clinical studies have demonstrated the excellent nutritional effectiveness of the administration of donkey's milk (DM) in infants suffering for immunologic allergy or intolerance to cow's milk proteins (Carroccio et al., 2000; Iacono et al., 1992, Monti et al., 2007, Vita et al., 2007). Such studies have also highlighted the excellent palatability of donkey's milk compared to products based on soy and/or protein hydrolysates. The donkey's milk composition can vary significantly between different races, however, it is likely to be more similar to human milk than cow's and goat milk (Medhammar et al., 2011; Salimei et al., 2004). In particular, in relation to the main chemical characteristics of donkey milk, the average protein content has resulted to be slightly higher than the human milk protein content, but of significantly lower level than that of cow's milk. The same remarks apply to the ratio casein/whey protein that appears to be close to that found in human milk. The protein component of donkey milk (about 1.63 g/100 g) is very similar to that of human milk (about 1.50 g/100 g), in particular for the low content of casein and lactoglobulin and for the high concentration of lysozyme. Contrarily to some ruminants milk, donkey milk contains lysozyme levels similar to human milk, as well as a high concentration of essential amino acids (Salimei et al., 2004). As regards the whey protein component, the donkey's milk is characterized by a β-lactoglobulin content, which is notoriously characterized by high allergenic power, equal to 30% of the fraction of milk whey proteins. Consequently, the content of β-lactoglobulin of donkey's milk is much lower than that found in bovine and equine milk (Bertino et al. 2010).

Lysozyme concentration is very high in donkey milk, the enzyme is responsible for hydrolysis of α 1-4 bond between the N-acetyl muramic acid and N-acetyl glucosamine of peptidoglycan, forming the bacterial cell wall, with subsequent bacteriolytic activities present only in trace amounts in cow's milk. The presence of lysozyme is important because it plays a selective action against potentially pathogenic microflora in the gastro-intestinal tract of the infant.

Among the bioactive compounds in donkey milk lactoferrin is present in amount of 4.5% of total serum protein, a concentration higher than that found in human and cow's milk. Lactoferrin acts an important role in the innate immunity of the host, it has high immunomodulating, antiviral and antimicrobial activity. Furthermore, donkey milk has a high lactose content (about 6.73 g/100 g), comparable to that of human milk (6.50 g/100 g), which makes it extremely palatable. Lactose has a major role in calcium metabolism; it stimulates the calcium absorption in the proximity of the intestinal mucosa and positively influences bone mineralization. Moreover, a high lactose content emphasizes the prebiotic role of donkey's milk as a suitable substrate for the proper development of the intestinal lactic flora of infants.

The European patent applications EP 2248908 and EP 2427566 describe strains of probiotic bacteria belonging to the genus of lactibacillus isolated from donkey's milk compositions and their use in fermented milk based foods and beverages.

The main difference between donkey and human milk regards the lipid component. Although the composition of the lipid fraction of donkey milk is comparable to that of human milk in percentage, the total lipid content in donkey's milk is on average equal to 0.30 g/100 g, compared to that of human milk equal to 3.5 g/100 g.

The average minerals concentration in donkey milk is close to the nutritional and metabolic needs of the newborn. Donkey and breast milk are similar with regard to the low renal solute load (proteins and inorganic substances).

Donkey milk is a natural product, the closer one to breast milk, for its organoleptic properties and the hypoallergenic value, and therefore, it represents a valid substitute in cases wherein the nutrition with breast milk is not possible or sufficient, and in cases of infants with or at risk of intolerance or allergy to cow's or other source milk protein.

However, the low fat content of donkey's milk determines its lower energetic value (∼ 44 kcal/100 ml) than human (∼ 65 kcal/100ml) and other mammals milk, and this does not allow the use of donkey milk, as it is in nature, as the only source of food alternative to cow's milk (D'Auria et al., 2011).

As for donkey milk processing, storage and distribution, in the state of the art no heat treatment applied in breeding, that could guarantee the lasting health and hygiene safety, is described. Generally, the just milked donkey milk is filtered and stored under refrigeration and, after packaging, stored in a refrigerator at a temperature between 0 °C and 4 °C until delivered to the ultimate consumer in the form of not pasteurized raw milk. Before use, it is recommended to heat at slow fire the milk, up to reaching the temperature of 70 °C for at least 2 minutes. This procedure is performed by the consumer without equipped structures or standardized procedures, which can deplete, at high temperatures, the milk of certain nutrients, such as vitamins, and structurally alter the proteins, with the formation of small granules of precipitate, harmless but decreasing the nutritional and organoleptic properties of milk. In addition, sanitation risks may occur if the heat treatment is not carried out at the required temperatures and for the necessary time.

The international patent application WO95/01100 describes a donkey's milk conservation method comprising the steps of cooling the milk to a temperature between 4 and 10 °C, filtration, distribution of the cooled milk in tube containers having volume smaller than 20ml, and subsequent slow freezing and without agitation of said milk containing containers at a temperature between -18 and -40 °C. The obtained product is then used in cosmetic industry as skin tensor agent to suppress wrinkles and as a medicament as external anti-inflammatory agent.

In view of the above, it is clear that donkey milk can be a viable alternative in the treatment of intolerance/allergy to cow's milk protein, compared to the currently available therapies.

Unfortunately, the reduced lipid components makes it not suitable to meet the real nutritional needs of the newborn and the current procedures for packaging, processing and distribution do not include heat treatment to ensure the health and hygiene safety of the final product.

The milk formula was developed with the aim of creating a nutritionally viable alternative to breast milk or in some cases to meet specific nutritional needs of the infant/child or to deal with specific disorders such as allergy to cow's milk protein. It should be considered that the newborn nutritional needs may also vary depending on gestational age, birth weight, and/or certain pathologic situations.

In the absence of breast milk and in the unavailability of human milk "bank", it uses special formulas intended for preterm infants, which are recommended for the entire period in which such children have not yet reached the maturity of major gastrointestinal function. The most recent recommendations of the International Society of Nutrition (ESPGHAN) propose specific composition characteristics for these formulas, both for the protein and the lipid profile. In particular, lipids should derive both from animal and vegetal sources and be predominantly in unsaturated form, with a ratio linoleic acid/α-linolenic acid between 6 and 7. The addition of long-chain preformed poly-unsaturated fatty acids (LC-PUFA) allows to reach amounts similar to those of human milk.

It should be considered that lipid digestion in the premature infant is considered not as well documented as in the term infant.

In the infant the reference model for the requirements is still breast milk, which is in the first months of life the only source of fat perfectly suited to the energy, structural and metabolic requirements of the organism.

The nutrients added to the functional formulas are designed to mimic the composition of human milk and make the formula appropriate to the nutritional needs of the newborn. Among the major functional nutrients fats play an important role in the growth and development of the newborn.

The fatty acids of human milk are mostly unsaturated. Moreover, 70% of palmitic acid is esterified in position β and it is absorbed as monoglyceride. This ensures optimal calcium absorption and increased ease of evacuation.

Therefore, the addition of palmitic acid esterified in position β in infant formula enables a greater calcium absorption, an improved bone mineralization, a more rapid intestinal transit.

Swar M O. Donkey milk-based formula: A substitute for patients with cow's milk protein allergy. Sudan J Paediatr 2011; 11(2):21-24 discloses a donkey milk-based formula which comprises donkey milk with the addition of 1.6 g of sunflower oil to 100 mL of donkey milk.

### Summary of the invention

In view of the above, the invention is aimed to exploit the nutritional and hypoallergenic properties of the donkey milk and to compensate for the lack of lipid and caloric portion, which would make it unsuitable for feeding the newborn, supplementing it with the addition of a mixture of triglycerides derived from vegetable oils wherein 35 to 55% of the total content of palmitic acid (C16:0) is esterified in position β (sn-2) in the molecule of glycerol, vegetable oils rich in essential fatty acids (omega-3 and omega-6) and long-chain polyunsaturated fatty acids (LC-PUFA), to reach a composition closer to that of breast milk. In this way donkey milk is suitable to meet all the nutritional and metabolic requirements of infants, from preterm onwards, helping to improve the neurobehavioral development, to decrease the probability of developing obesity and overweight over the years, to favor the intestine prevalence of a bifidogenic flora, to improve the fat absorption, to decrease the probability of occurrence of constipation and small digestive disorders in general, in addition to being hypoallergenic.

The invention is also intended to exploit the nutritional and hypoallergenic properties of donkey's milk compensating for the lack of lipid and calories amounts as explained and further including possibly the addition of natural thickeners such as carob flour or starch corn, which could make the resulting donkey milk suitable to meet all the nutritional and metabolic requirements of newborn children, from preterm onward, in cases of allergies and gastroesophageal reflux (anti-reflux formula milk, AR).

### Detailed description of the invention

Object of the present invention is a formulation based on raw donkey milk fortified with a lipid mixture and subsequently subjected to inactivation of pathogenic microbial flora or lyophilized, for subjects suffering from allergy or intolerance to cow's milk proteins.

Said lipid mixture comprises:
- a mixture of triglycerides derived from vegetable oils wherein from 40 to 50% of the total content of palmitic acid (C16:0) is esterified in position β (sn-2) in the glycerol molecule,
- vegetable oils with high content of essential fatty acids,
- long-chain polyunsaturated fatty acids.

Currently formulas with a high content of palmitic acid in position β are obtained by esterification of palm oil rich in tripalmitin with other vegetable oils, using a specific alpha-gamma lipase, obtained from *Rhizomucor miehei* or *Aspergillus oryzae,* through biotechnology techniques. In this way a repositioning of fatty acids in triglycerides is obtained giving rise to a structure closer to that of breast milk. A substantial difference between the lipid composition of breast milk and the standard formulated milk lies in the position of fatty acids in triglycerides. In the women milk 70% of palmitic acid is "internally" esterified (beta position), where it is inaccessible to the action of pancreatic lipase, which instead breaks off peripheral fatty acids (alpha and gamma positions). Therefore palmitic acid can be absorbed in the intestine as a monoglyceride. In many currently available infant formulas, however, palmitic acid, situated for 90% "externally" in the alpha position, is easily hydrolyzed by lipase and complexes with calcium ions, generating calcium palmitate. This compound prevents the intestinal absorption of both calcium and palmitic acid, which ends up giving the stool a hard consistency, characteristic of artificially fed infants.

The specific mixture of triglycerides used in the formulation object of the invention has a percentage of C16 fatty acids esterified in position β of at least 43% compared to total fatty acids C16, up to a maximum of 2% of trans fatty acids, up to a maximum of 0.1% of free fatty acid as oleic acid, a maximum value of peroxide equal to 1 meq/kg, a maximum water content of 0.3%. The fatty acid composition is:

| | |
|---|---|
| C8:0 | 0.6 - 1.5% |
| C10:0 | 0.7 - 1.5% |
| C12:0 | 9.5 - 14% |
| C14:0 | 3 - 5% |
| C16:0 | 21 - 24% |
| C18:0 | 2.5 - 5% |
| C18:1 | 38 - 44% |
| C18:2 | 12 - 15% |
| C18:3 | 1.3 - 1.9%. |

The innovative introduction in donkey's milk of such mixture of triglycerides wherein palmitic acid is structured in beta position, is a functional correlate with woman breast milk and is an important step in the approaching path to the gold standard providing, furthermore, undoubted nutritional advantages, such as:
- Increased uptake of palmitic acid;
- Increased absorption of calcium;
- Increased bone mineralization;
- Reduced formation of soaps;
- Lower incidence of constipation.

In particular, in the group of the essential fatty acids present in vegetable oils of the present invention, linoleic acid (LA), the progenitor of the omega-6 series and alpha-linolenic acid (ALA), the progenitor of the omega-3 series, that is, the polyunsaturated fatty acids which, for the intervention of some enzymes, give rise to the long-chain compounds (LC-PUFA), are included. Such fatty acids are called 'essential' (EFA) as they necessarily must be taken with the diet since the human body is unable to synthesize them.

Essential fatty acids in the body perform three important functions closely related each other:
- structural function,
- metabolic function,
- other lipids transport function, mainly cholesterol.

The essential fatty acids and their derivatives are important components of structural lipids, the lipids involved in the constitution of the cell membranes throughout the body, but in particular of neurons, nerves, myelin sheaths, retina and heart vessels.

The brain maximally develops during fetal life and immediately post-natal, in its growth more than 50% of total energy costs in that stage of life is concentrated, so that the human organism has a high demand of fat quantitative, but also needs quality of essential fatty acids and their derivatives.

The polyunsaturated fatty acids of the omega-6 and omega-3 serie constitute 20% of the solid matter of the brain. The docosahexaenoic acid (DHA) (22:6) is an essential fatty acid of the omega-3 serie which is the major component of brain, visual structures and excitable membranes and it is believed to exercise an important influence on the stability of the membrane and on the functional properties of membrane proteins of all parenchyma cells.

Even arachidonic acid (ARA), mainly responsible for the growth of the fetus, is a component of excitable membranes, but also plays a role as second messenger and precursor of many hormones. The omega-6 and omega-3 LC-PUFA are also precursors of numerous mediators of inflammatory processes.

The LC-PUFA therefore influence the child physical and neuropsychological development and have structural biological effects, acting on permeability, fluidity and function of cell membranes, particularly those synaptic and retinal, for which a deficiency can damage their progression in placenta, vascular system, brain and fetal nervous system overall, with potential long-term consequences.

It has also been found having an impact on the course of infections, platelet aggregation, cardiovascular activity, skin, inflammation, immunity, outcome of transplants and some cancers.

In view of the above it is clear the importance of the dietary lipids in all stages of life, but particularly in the stages with high rate of growth and anabolic type metabolism. Proper nutrition from a qualitative point of view is essential to establish and maintain an optimal health state both at a strictly physical and mental and cognitive level.

Given the high variability of the donkey's milk as a raw material of the object of the present invention it is possible to further fortify the donkey milk, in liquid form or lyophilized, with vitamins, minerals, prebiotics, proteins, carbohydrates, in order to adjust the formulations to the current standards and recommendations in force or to meet specific nutritional, metabolic and/or pathological needs of the newborn.

In a preferred embodiment of the present invention, the lipid composition used to fortify the donkey's milk comprises:
- triglycerides derived from vegetable oils wherein the palmitic acid (C16:0) is esterified in position β (sn-2) in the molecule of glycerol in amount equal to 40-55% of the total weight, preferably equal to 50%;
- sunflower oil with high content of oleic acid in amount equal to 13-23% of the total weight, preferably equal to 18%;

- sunflower oil equal to 5-15% of the total weight, preferably equal to 10%;
- rapeseed oil equal to 2-5% of the total weight, preferably 3.2%;
- linseed oil equal to 1-3% of the total weight, preferably equal to 2.2%;
- arachidonic acid equal to 1-3% of the total weight, preferably equal to 1.5%;
- refined fish oil or algal oil with a high content of DHA equal to 0.5-1.5% of the total weight, preferably equal to 0.9%;
- mono/diglycerides of fatty acids equal to 0.5-1.5% of the total weight, preferably equal to 1%.

Therefore, the invention is aiming to combine the experience from the current knowledge about the importance of the lipid mixture suitable for the newborn growth and the peculiar and sole features of antigenicity of donkey milk.

Given that in the infant the breast milk remains the reference model for the requirements, based on clinical research in the field, the Applicant has developed a lipid mixture that makes the current alternatives to the breast milk, as similar as possible to the reference standard.

Such a mixture, consisting of triglycerides derived from vegetable oils wherein 35 to 55% of the total content of palmitic acid (C16:0) is esterified in position β (sn-2) in the glycerol molecule, vegetable oils rich in essential fatty acids (omega-3 and omega-6) and long-chain polyunsaturated fatty acids (LC-PUFA), allows to obtain a composition more similar to that of breast milk, where the fatty acids are mainly unsaturated. Moreover, 70% of palmitic acid is esterified in position β and absorbed as monoglyceride. This ensures an optimal absorption of calcium and increased ease of evacuation: the addition of palmitic acid esterified in position β in milk formula allows a greater absorption of calcium, an improved bone mineralization, a more rapid intestinal transit.

This mixture, combined with the already known and discussed hypoallergenic qualities of donkey milk, allows to create a so far not available alternative to breast milk, providing a nutritional strategy for all infants with allergy to cow's milk proteins.

A further object of the present invention is to provide that the product based on donkey's milk fortified with lipid mixture is subjected to a short time heat treatment of pasteurisation method and sterilization or other method to prolong the preservation of the product over time.

In fact, according to the invention, donkey milk collected from various farms, as a raw material of the food product, before being fortified by the addition of the lipid mixture according to the invention, is controlled by the in-house laboratory which carries out physical-chemical analysis to confirm its suitability and then is sent to a heat treatment.

The heat treatment can be achieved by flash pasteurization "High Temperature Short Time" (HTST) processing, direct sterilization UHT or Extended Shelf Life (ESL) sterilization, ultrafiltration or any other new generation inactivation treatment of pathogenic microorganisms (eg. supercritical CO₂) which can extend the shelf life of the product, or, for the same shelf life, ensure better quality nutritional characteristics. After the heat treatment follows, if necessary, the process of freeze-drying or spray-drying, and finally the packaging.

Therefore, the production method of the food based on fortified donkey milk in a preferred embodiment of the present invention comprises the following steps:
- collection of donkey milk from several farms;
- physical-chemical analysis of the raw material;
- addition of the lipid mixture comprising:
   - a mixture of triglycerides derived from vegetable oils wherein 40 to 50% of the total content of palmitic acid (C16:0) is esterified in position β(sn-2) in the molecule of glycerol;
   - vegetable oils high in essential fatty acids;
   - long-chain polyunsaturated fatty acids;
- inactivation treatment of pathogenic microorganisms;
- freeze-drying or spray drying (optional);
- packaging.

We describe below in detail some heat treatments taking into account that it is possible also to use other methods to prolong the preservation of the product such as ultrafiltration or new technologies such as CO₂ supercritical extraction.

### Heat treatment by Flash Pasteurization "High Temperature Short Time"

The milk, after preheating, is quickly brought to a temperature of at least 72 °C for at least 15 seconds. Such pasteurization is achieved reducing the milk in a thin layer which is passed through a system of sheathed pipes and heated at a pressure such as to allow in a defined time to reach the desired temperature. This technology exploits the phenomenon by which the bacterial cells are attracted towards the surface of the heat exchange tubes: this causes a turbulent flow of the fluid that ensures efficient and uniform heat exchange. At a temperature of 72 °C about 96% of the bacteria is eliminated; of primary importance is the reduction of bacteria of vegetative forms of tuberculosis mycobacteria and brucellosis bacteria, in addition to other important pathogens such as, Enterobacteriaceae, coagulase-positive staphylococci, Pseudomonas, Salmonella, Listeria and other minor microorganisms, while a 5% consisting of the spores resists, i.e. resistance forms produced by bacteria able to withstand heat. To slow down the growth of the remaining bacteria, the milk is quickly cooled to 4 °C. Pasteurized milk may be stored at 4 °C for four to six days. The milk that has undergone such treatment can be defined as "fresh" and must be "phosphatase negative" and "peroxidase positive", as objective demonstration that the heat treatment was done at a temperature not lower than 72 °C and not higher than 78 °C for 15 seconds, i.e. treated at a temperature above the level of destruction of pathogenic but not overheated.

### UHT (Ultra High Temperature) direct teratment

The donkey milk homogenized and preheated to at least 135 °C is then treated by a particular sterilization technique through the use of superheated steam for not less than 2-4 seconds.

It is referred as "indirect" UHT system when the milk sterilization is performed via heat exchangers (plates or tubes), while it is said "direct" UHT (Uperization TM) when the milk sterilization occurs in direct contact with the heating fluid i.e. water vapor, which is re-evaporated in the subsequent flash vacuum cooling phase.

Typically the direct treatment (about 150 °C for 2-4") gives rise to a better product in relation to the organoleptic properties than that obtained by indirect treatment due to a minor "thermal effect". Subsequently the milk cools at 15-20 °C and proceeds through sterile closed systems, by continuous flow, to the aseptic packaging in sterile containers in line (brik, PET or HDPE bottles) that are tightly closed. The tightness condition of the container is an essential condition for the long storage. However, the UHT treatment does not ensure the destruction of the more resistant spores: the commercial sterility is defined as "absence of microorganisms able of reproducing and damaging the product under normal storage conditions at room temperature" (microbiological stability). The UHT milk is considered "long-life" and can be stored for about 9-12 months at room temperature.

### "Extended Shelf-Life" (ESL) heat treatment

The ESL heat treatment differs from the standard UHT treatment in that it provides lower temperatures than the standard UHT process. The product is treated at a temperature around 125 °C for a time ranging between 0.2-5''. The product undergone to ESL treatment is characterized by a shelf life of 21-28 days if stored under refrigeration (between 0 and 4 °C), which is an intermediate shelf life between that of the product under HTST and UHT. The ESL process makes the milk retain many characteristics of fresh milk.

### Lyophilization

The invention also provides the option of starting from freeze-dried donkey milk and fortified to meet specific nutritional requirements, metabolic and/or pathological conditions of the newborn.

The lyophilization is a technologic process that allows the total elimination of water from foods which are reduced in dehydrated powder that adequately packaged permit its storage for a long period at room temperature. Such powders by adding the right amount of water take taste and nutritional (or therapeutic) characteristics that the liquid products had before treatment.

Freeze-drying can be defined as a process of controlled dehydration of products previously frozen leading to products in freeze-dried powders with characteristics very similar to those of the original products with several advantages, such as:
- long term storage, more than two years, even at room temperature, if properly packaged;
- protection against contamination by microorganisms;
- hygiene faultless;
- ease of transport and storage of the product;
- rapid reconstitution of the product as soon as the freeze-dried is placed in the presence of water;
- preservation of the characteristics of the original product (protein heritage, vitamins content, minerals and lipids, whose conservation is ensuring the good digestibility of the product).

The freeze-drying process consists of three main phases:
- sample freezing
- primary drying or sublimation chosen according to the limit values for temperature and pressure
- secondary drying or desorption of the sample from which the water and/or the crystallization water is removed.

### Spray-drying

As an alternative to lyophilization the possibility of using high drying methods, such as spray-drying is provided. Spray-drying is the most widely used technology process for obtaining foods in powder, granules or agglomerates from liquid products (with at least 50% solids) as solutions and emulsions. The liquid is pumped into the spray chamber by a centrifugal atomizer which, rotating at high speed atomizes it and centrifuges it towards the chamber walls. The chamber is internally heated by a current of hot air (usually 180 °C). The contact between air and atomized product causes the evaporation of small drops of water, formed during nebulization.

The main advantage of the product treated according to the method of the present invention, compared to those currently available on the market, consists in having available a fresh donkey milk subjected to heat treatment by the latest technology, homogenized, having high calories content, aseptically packaged and therefore safer, formulated for the specific needs of early childhood and then having higher calorie content than that of a starting donkey milk, available to the end user under controlled hygienic and stable.

Further characteristics and advantages of the present invention will appear clearly from the following examples given by non-limiting way.

In Table 1 is given an example of formulation that illustrates the composition of the invention without any way limiting the purpose thereof. Table 1

| FORTIFIED FORMULA FROM DONKEY MILK RAW | | |
|---|---|---|
| **Analitic composition** | | **per 100 ml** |
| | | |
| Energy value | kcal | 30-100 |
| Proteins | g | 0,1-5,0 |
| Lattoferrin | mg | 0-150 |
| Carbohydrates | g | 1,0-10 |
| Lactose | g | 0-10 |
| Maltodexstrins | g | 0-10 |
| Fructoligosaccharides | g | 0-10 |
| Lipids | g | 0,1-10 |
| Linoleic acido | mg | 60-2000 |
| α-linolenico acido | mg | 0-200 |
| DHA | mg | 0-200 |
| ARA | mg | 0-400 |
| Cholesterol | mg | 0-10 |
| Sodium | mg | 0-100 |
| Potassium | mg | 0-200 |
| Calciim | mg | 0-200 |
| Magnesium | mg | 0-20 |
| Phosphorus | mg | 0-120 |
| Chloride | mg | 0-150 |
| Iron | mg | 0-10 |
| Zinc | mg | 0-10 |
| Cupper | mcg | 0-200 |
| Iodine | mcg | 0-100 |
| Manganese | mcg | 0-80 |
| Selenium | mcg | 0-10 |
| Fluorine | mcg | 0-30 |
| Vitamin A | mcg RE | 0-500 |
| Vitamin D₃ | mcg | 0-50 |
| Vitamin E | mg | 0-30 |
| Vitamin K₁ | mcg | 0-60 |
| Vitamin C | mg | 0-200 |
| Vitamin B₁ | mcg | 0-200 |
| Vitamin B₂ | mcg | 0-250 |
| Vitamin B₆ | mcg | 0-200 |
| Vitamin B₁₂ | mcg | 0-20 |
| Niacine | mg | 0-20 |
| Pantotenic Acid | mg | 0-20 |
| Folico Acid | mcg | 0-200 |
| Biotin | mcg | 0-50 |
| Taurine | mg | 0-30 |
| Colin | mg | 0-30 |
| Inositol | mg | 0-50 |
| L-Carnitine | mg | 0-20 |
| Nucleotides | mg | 0-30 |

### Experimental Procedure

The operating phases for obtaining a donkey milk based food fortified according to the invention sterilized by a treatment which inactivates pathogenic microorganisms is described herewith. To the raw material, constituted by donkey milk raw collected from various farms in the tank of the plant, a mixture of lipids and vitamins, specially prepared to integrate in relation to energy and nutrition donkey's milk and reach the formulation indicated in table 1 is added.

By means of pumps and piping, the donkey milk fortified is sent to the system where the following steps are performed:
1. Heat treatment (by means of pasteurisation, sterilization (uperization), "Extended Shelf-Life" (ESL), and any type of treatment known to skilled in the field used to ensure food security and the preservation of the properties of the product.
2. Expansion, cooling and deodorization in Degaser: the milk at about 150 °C passes into Degaser (a vacuum chamber) and expands with consequent separation of the vapors, heat subtraction and decrease of the temperature to 80/90 °C with subsequent deodorization for removal of volatile substances eventually present.
3. Homogenization: when the product is at a temperature of about 80 °C the homogenization, aiming to crush the globules of fat in such a way to reduce the spontaneous outcrop, takes place. The milk through a nozzle at a pressure of 160 bar is subsequently brought to atmospheric pressure in an expansion chamber, causing a depression that shatters the globules.
4. Cooling: the milk is then gradually cooled to room temperature of 20-30 °C to stop the chemical reactions occurring at high temperatures.
5. Packaging: the outgoing UHT milk from the system is conveyed in continuous through sterile tubing to packaging, performed in sterile containers, preferably polyethylene terephthalate (PET).

The treatment plants are generally connected to a personal computer (PC) that allows to control and record the entire process.

Before operation the plant sterilization is accomplished with steam at 160 °C for 50 min. A safety device starts the timer only when the outlet temperature is 130 °C, to ensure that all parties have achieved the required sterility.

At the end of the processing the plant is washed with caustic soda solution at 85 °C and after a rinsing with nitric acid at 80 °C for a total time defined by plant characteristics; even the plant washing procedure is handled and controlled through special software in order to verify the correctness of the procedure.

The sterilized product obtained is packed in aseptic environment and stored at room temperature.

Alternatively, if the milk has undergone the HTST treatment, it is subjected to a rapid freezing: the packaged milk is placed in ULT freezer at temperatures below -80 °C to ensure the maintenance of hygienic and sanitary characteristics for a long period (proposed commercial duration 1 to 2 years after packing).

When the product is made from lyophilized donkey milk, this can be fortified to achieve the desired formulation, indicated in the table, both when it is in the form of raw donkey milk before being subjected to the lyophilization or spraying process and after the lyophilization or spraying process by addition of a powder mixture, to achieve the desired formulation indicated in the table. The product is then packaged in aseptic environment and stored at room temperature.

### Bibliography

- American Academy of Pediatrics Committee on Nutrition. Hypoallergenic Infant Formulas. Pediatrics 2000;106:346-9.
- Agostoni C, Axelsson I, Goulet O, Koletzko B, Michaelsen KF, Puntis JW, Rigo J, Shamir R, Szajewska H, Turck D, Vandenplas Y, Weaver LT; ESPGHAN Committee on Nutrition Preparation and handling of powdered infant formula: a commentary by the ESPGHAN Committee on Nutrition. J Pediatr Gastroenterol Nutr. 2004 Oct; 39(4):320-2.
- Agostoni C, Domellöf M. Infant formulae: from ESPGAN recommendations towards ESPGHAN-coordinated global standards. J Pediatr Gastroenterol Nutr. 2005 Nov;41(5): 580-3.
- Agostoni C, Buonocore G, Carnielli VP, De Curtis M, Darmaun D, Decsi T, Domellof M, Embleton ND, Fusch C, Genzel-Boroviczeny O, Goulet O, Kalhan SC, Kolacek S, Koletzko B, Lapillonne A, Mihatsch W, Moreno L, Neu J, Poindexter B, Puntis J, Putet G, Rigo J, Riskin A, Salle B, Sauer P, Shamir R, Szajewska H, Thureen P, Turck D, van Goudoever JB, Ziegler EE; ESPGHAN Committee on Nutrition. Enteral nutrient supply for preterm infants: commentary from the European Society of Paediatric Gastroenterology, Hepatology and

Nutrition Committee on Nutrition. J Pediatr Gastroenterol Nutr. 2010 Jan;50(1):85-91.
- Bertino E, Gastaldi D, Monti G, Baro C, Fortunato D, Perono Garoffo L, Coscia A, Fabris C, Mussap M, Conti A. Detailed proteomic analysis on DM: insight into its hypoallergenicity. Front Biosci (Elite Ed). 2010;2:526-36.
- Braegger C, Chmielewska A, Decsi T, Kolacek S, Mihatsch W, Moreno L, Pieścik M, Puntis J, Shamir R, Szajewska H, Turck D, van Goudoever J; ESPGHAN Committee on Nutrition. Supplementation of infant formula with probiotics and/or prebiotics: a systematic review and comment by the ESPGHAN committee on nutrition. J Pediatr Gastroenterol Nutr. 2011 Feb;52(2):238-50. Review
- Businco L, Giampietro PG, Lucenti P, Lucaroni F, Pini C, Di Felice G, Iacovacci P, Curadi C, Orlandi M. Allergenicity of mare's milk in children with cow's milk allergy. J Allergy Clin Immunol. 2000;105(5):1031-4.
- Cantani A, Micera M. Immunogenicity of hydrolysate formulas in children. Analysis of 202 reactions. J Investig Allergol Clin Immunol 2000;10:261-76.
- Carroccio A, Cavataio F, Montalto G, D'Amico D, Alabrese L, Iacono G. Intolerance to hydrolysed cow's milk proteins in infants: clinical characteristics and dietary treatment. Clin Exp Allergy. 2000;30(11):1597-603.
- Civardi E, Tzialla C, Garofoli F, Mazzucchelli I, Bollani L, Stronati M. Nutritional needs of premature infants. J Matern Fetal Neonatal Med. 2011 Oct;24 Suppl 1:27-9. Epub 2011 Sep 16. Review.
- D'Auria E, Mandelli M, Ballista P, Di Dio F, and Giovannini M. Growth Impairment and Nutritional Deficiencies in a Cow's Milk-Allergic Infant Fed by Unmodified Donkey'sMilk. Hindawi Publishing Corporation. Case Reports in Pediatrics. 2011, 103825, doi:10.1155/2011/103825
- ESPGHAN Committee on Nutrition, Agostoni C, Axelsson I, Goulet O, Koletzko B, Michaelsen KF, Puntis J, Rieu D, Rigo J, Shamir R, Szajewska H, Turck D. Soy protein infant formulae and follow-on formulae: a commentary by the ESPGHAN Committee on Nutrition. J Pediatr Gastroenterol Nutr. 2006 Apr;42(4):352-61.
- Høst A, Koletzko B, Dreborg S, Muraro A, Wahn U, Aggett P, et al. Dietary products used in infants for treatment and prevention of food allergy. Joint Statement of the European Society for Pediatric Allergology and Clinical Immunology (ESPACI) Committee on Hypoallergenic Formulas and the European Society for Pediatric Gastroenterology, Hepatology and Nutrition (ESPGHAN) Committee on Nutrition. Arch Dis Child 1999;81:80-4.
- Host A, Halken S. Hypoallergenicformulas - when, to, whom and how long; after more then 15 years we know the right indication! Allergy 2004;59:45-52.
- Iacono G, Carroccio A, Cavataio F, Montalto G, Soresi M, Balsamo V. Use of ass' milk in multiple food allergy. J Pediatr Gastroenterol Nutr. 1992;14(2):177-81.
- Koletzko B, Baker S, Cleghorn G, Neto UF, Gopalan S, Hernell O, Hock QS, Jirapinyo P, Lonnerdal B, Pencharz P, Pzyrembel H, Ramirez-Mayans J, Shamir R, Turck D, Yamashiro Y, Zong-Yi D. Global standard for the composition of infant formula: recommendations of an ESPGHAN coordinated international expert group. J Pediatr Gastroenterol Nutr. 2005 Nov;41(5): 584-99.
- Medhammar E, Wijesinha-Bettoni R, Stadlmayr B, Nilsson E, Charrondiere UR, Burlingame B. Composition of milk from minor dairy animals and buffalo breeds: a biodiversity perspective. J Sci Food Agric. 2011. doi: 10.1002/jsfa.4690.
- Monti G, Bertino E, Muratore MC, Coscia A, Cresi F, Silvestro L, Fabris C, Fortunato D, Giuffrida MG, Conti A. Efficacy of donkey's milk in treating highly problematic cow's milk allergic children: an in vivo and in vitro study. Pediatr Allergy Immunol. 2007;18(3):258-64
- Salimei E, Fantuz F, Coppola R, Chiofalo B, Polidori P, and Varisco G. "Composition and characteristics of ass's milk" Animal Research, vol. 53, no. 1, pp. 67-78, 2004.
- Sampson HA. Update on food allergy. J Allergy Clin Immunol 2004:113:805-19.
- Vita D, Passalacqua G, Di Pasquale G, Caminiti L, Crisafulli G, Rulli I, Pajno GB. Ass's milk in children with atopic dermatitis and cow's milk allergy: crossover comparison with goat's milk. Pediatr Allergy Immunol. 2007;18(7):594-8.

## Claims

1. Food for subjects with allergy or intolerance to cow's milk protein, particularly for preterm infants and/or in term infant, **characterized by** being based on donkey milk, raw or freeze-dried, supplemented with a lipid mixture comprising:
- a mixture of triglycerides derived from vegetable oils wherein 40 to 50% of the total content of palmitic acid (C16:0) is esterified in position β (sn-2) in the molecule of glycerol;
- vegetable oils high in essential fatty acids;
- long-chain polyunsaturated fatty acids;
and subsequently subjected to treatment of inactivation of pathogenic microorganisms.

2. Food according to claim 1 **characterized by** the fact that the fatty acid composition of said mixture of triglycerides is:
| | |
|---|---|
| C8:0 | 0.6 - 1.5% |
| C10:0 | 0.7 to 1.5% |
| C12:0 | 9.5 to 14% |
| C14:0 | 3 - 5% |
| C16:0 | 21 - 24% |
| C18:0 | 2.5 - 5% |
| C18:1 | 38 - 44% |
| C18:2 | 12 - 15% |
| C18:3 | 1.3 - 1.9%. |

3. Food according to claim 1 **characterized by** the fact that in the lipid mixture said mixture of triglycerides is present in a percentage ranging from 40 to 55% of total weight, preferably in a percentage ranging from 48 to 52% of the total weight, even more preferably 50% of total weight.

4. Food according to the preceding claim **characterized in that** the lipid mixture further comprises:
- sunflower oil with high oleic acid content between 13 to 23% of total weight;
- sunflower oil between 5 to 15% of total weight;
- rapeseed oil between 2 to 5% of total weight;
- linseed oil between 1 to 3% of total weight;
- arachidonic acid between 1 to 3% of total weight;
- refined fish oil between 0.5 to 1.5% of total weight;
- mono/diglycerides of fatty acids between 0.5 to 1.5% of total weight.

5. Food according to claim 3 **characterized in that** the lipid mixture further comprises:
- sunflower oil with high oleic acid content amounting to 18% of total weight;
- sunflower oil amounting to 10% of total weight;
- rapeseed oil amounting to 3.2% of total weight;
- linseed oil amounted to 2.2% of total weight;
- arachidonic acid amounting to 1.5% of total weight;
- refined fish oil amounting to 0.9% of total weight;
- mono/diglycerides of fatty acids amounting to 1% of the total weight.

6. Food according to claim 1, **characterized by** the fact that its analytical composition is as follows:
| | | |
|---|---|---|
| proteins | 0.1-5.0 | g |
| lactoferrin | 0-150 | mg |
| carbohydrates | 1.0-10 | g |
| lactose | 0-10 | g |
| maltodextrin | 0-10 | g |
| fructooligosaccharides | 0-10 | g |
| fat | 0.1-10 | g |
| linoleic acid | 60-2000 | mg |
| α-linolenic acid | 0-200 | mg |
| DHA | 0-200 | mg |
| ARA | 0-400 | mg |
| cholesterol | 0-10 | mg |
| sodium | 0-100 | mg |
| potassium | 0-200 | mg |
| calcium | 0-200 | mg |
| magnesium | 0-20 | mg |
| phosphorus | 0-120 | mg |
| chlorine | 0-150 | mg |
| iron | 0-10 | mg |
| zinc | 0-10 | mg |
| copper | 0-200 | mcg |
| iodine | 0-100 | mcg |
| manganese | 0-80 | mcg |
| selenium | 0-10 | mcg |
| fluorine | 0-30 | mcg |
| vitamin A | 0-500 RE | mcg |
| vitamin D3 | 0-50 | mcg |
| vitamin E | 0-30 | mg |
| vitamin K1 | 0-60 | mcg |
| vitamin C | 0-200 | mg |
| vitamin B1 | 0-200 | mcg |
| vitamin B2 | 0-250 | mcg |
| vitamin B6 | 0-200 | mcg |
| vitamin B12 | 0-20 | mcg |
| niacin | 0-20 | mg |
| pantothenic acid | 0-20 | mg |
| folic acid | 0-200 | mcg |
| biotin | 0-50 | mcg |
| taurine | 0-30 | mg |
| choline | 0-30 | mg |
| inositol | 0-50 | mg |
| L-Carnitine | 0-20 | mg |
| Nucleotides | 0-30 | mg |

7. Method for the production of a food for patients with allergy or intolerance to cow's milk protein, particularly for preterm infants and/or in term infants, **characterized in that** it comprises the following steps:
- collection of donkey milk from various farms;
- chemical-physical analysis of the raw material;
- addition of a lipid mixture comprising:
- a mixture of triglycerides derived from vegetable oils wherein 40 to 50% of the total content of palmitic acid (C16:0) is esterified in position β (sn-2) in the molecule of glycerol;
- vegetable oils high in essential fatty acids;
- long-chain polyunsaturated fatty acids;
- treatment for inactivation of pathogenic microorganisms;
- freeze-drying or spray-drying (optional);
- packaging.

8. Method according to claim 7, **characterized in that** the fatty acid composition of said mixture of triglycerides is:
| | |
|---|---|
| C8:0 | 0.6 - 1.5% |
| C10:0 | 0.7 to 1.5% |
| C12:0 | 9.5 to 14% |
| C14:0 | 3 - 5% |
| C16:0 | 21 - 24% |
| C18:0 | 2.5 - 5% |
| C18:1 | 38 - 44% |
| C18:2 | 12 - 15% |
| C18:3 | 1.3 - 1.9%. |

9. Method according to claim 7, **characterized by** the fact that in the lipid mixture said mixture of triglycerides is present in a percentage ranging from 40 to 55% of total weight, preferably in a percentage ranging from 48 to 52% of the total weight, even more preferably 50% of total weight.

10. A method according to the preceding claim **characterized in that** the lipid mixture further comprises:
- sunflower oil with high oleic acid content between 13 and 23% of total weight;
- sunflower oil between 5 to 15% of total weight;
- rapeseed oil between 2 to 5% of total weight;
- linseed oil between 1 to 3% of total weight;
- arachidonic between 1 to 3% of total weight;
- refined fish oil between 0.5 to 1.5% of total weight;
- mono/diglycerides of fatty acids between 0.5 to 1.5% 1% of the total weight.

11. Method according to claim 10 **characterized in that** the lipid mixture further comprises:
- sunflower oil with high oleic acid content amounting to 18% of total weight;
- sunflower oil amounting 10% of total weight;
- rapeseed oil amounting to 3.2% of total weight;
- linseed oil amounting to 2.2% of total weight;
- arachidonic acid amounting to 1.5% of total weight;
- refined fish oil amounting to 0.9% of total weight;
- mono/diglycerides of fatty acids amounting to 1% of the total weight.

12. Method for the production of a food for patients with allergy or intolerance to cow's milk protein, particularly for preterm infants and/or in term infants, according to claims from 7 onwards, **characterized in that** the treatment for the inactivation of pathogenic microorganisms is performed by rapid pasteurization or direct UHT treatment or lyophilization or spraying or any other method known to skilled in the field suitable to lengthen the preservation of the product.

## Patentansprüche

1. Nahrungsmittel für Personen mit einer
Kuhmilchproteinallergie oder Kuhmilchproteinintoleranz, insbesondere für Frühgeborene und/oder termingeborene Säuglinge, **dadurch gekennzeichnet, dass** es, auf roher oder gefriergetrockneter Eselsmilch basierend, mit einem Lipidgemisch ergänzt ist, das umfasst:
- ein Gemisch von Triglyceriden, die aus pflanzlichen Ölen gewonnen wurden, wobei 40 bis 50% des Gesamtgehalts an Palmitinsäure (C16:0) an Position β (sn-2) in dem Glycerinmolekül verestert sind;
- pflanzliche Öle, die reich an essentiellen Fettsäuren sind;
- langkettige mehrfach ungesättigte Fettsäuren;
und es anschließend einer Behandlung zur Inaktivierung von pathogenen Mikroorganismen unterworfen wurde.

2. Nahrungsmittel gemäß Anspruch 1, **dadurch gekennzeichnet, dass** die Fettsäurezusammensetzung des Gemisches von Triglyceriden wie folgt ist:
| | |
|---|---|
| C8:0 | 0, 6 - 1,5% |
| C10:0 | 0,7 bis 1,5% |
| C12:0 | 9,5 bis 14% |
| C14:0 | 3 - 5% |
| C16:0 | 21 - 24% |
| C18:0 | 2,5 - 5% |
| C18:1 | 38 - 44% |
| C18:2 | 12 - 15% |
| C18:3 | 1,3 - 1,9% |

3. Nahrungsmittel gemäß Anspruch 1, **dadurch gekennzeichnet, dass** in dem Lipidgemisch das Gemisch von Triglyceriden in einem Anteil im Bereich von 40 bis 55% des Gesamtgewichts, bevorzugt in einem Anteil im Bereich von 48 bis 52% des Gesamtgewichts, und noch bevorzugter von 50% des Gesamtgewichts vorhanden ist.

4. Nahrungsmittel gemäß dem vorhergehenden Anspruch, **dadurch gekennzeichnet, dass** das Lipidgemisch ferner umfasst:
- Sonnenblumenöl mit einem hohen Gehalt an Ölsäure zwischen 13 und 23% des Gesamtgewichts;
- Sonnenblumenöl zwischen 5 und 15% des Gesamtgewichts;
- Rapsöl zwischen 2 und 5% des Gesamtgewichts;
- Leinöl zwischen 1 und 3% des Gesamtgewichts;
- Arachidonsäure zwischen 1 und 3% des Gesamtgewichts;
- aufbereitetes Fischöl zwischen 0,5 und 1,5% des Gesamtgewichts;
Mono-/Diglyceride von Fettsäuren zwischen 0,5 und 1,5% des Gesamtgewichts.

5. Nahrungsmittel gemäß Anspruch 3, **dadurch gekennzeichnet, dass** das Lipidgemisch ferner umfasst:
- Sonnenblumenöl mit einem hohen Gehalt an Ölsäure in einer Menge von 18% bezogen auf das Gesamtgewicht;
- Sonnenblumenöl in einer Menge von 10% bezogen auf das Gesamtgewicht;
- Rapsöl in einer Menge von 3,2% bezogen auf das Gesamtgewicht;
- Leinöl in einer Menge von 2,2% bezogen auf das Gesamtgewicht;
- Arachidonsäure in einer Menge von 1,5% bezogen auf das Gesamtgewicht;
- aufbereitetes Fischöl in einer Menge von 0,9% bezogen auf das Gesamtgewicht;
Mono-/Diglyceride von Fettsäuren in einer Menge von 1% bezogen auf das Gesamtgewicht.

6. Nahrungsmittel gemäß Anspruch 1, **dadurch gekennzeichnet, dass** ihre analytische Zusammensetzung die folgende ist:
| | |
|---|---|
| Proteine | 0,1-5,0 g |
| Lactoferrin | 0-150 mg |
| Kohlenhydrate | 1,0-10 g |
| Lactose | 0-10 g |
| Maltodextrin | 0-10 g |
| Fructo-Oligosaccharide | 0-10 g |
| Fett | 0,1-10 g |
| Linolsäure | 60-2000 mg |
| α-Linolsäure | 0-200 mg |
| DHA | 0-200 mg |
| ARA | 0-400 mg |
| Cholesterin | 0-10 mg |
| Natrium | 0-100 mg |
| Kalium | 0-200 mg |
| Calcium | 0-200 mg |
| Magnesium | 0-20 mg |
| Phosphor | 0-120 mg |
| Chlor | 0-150 mg |
| Eisen | 0-10 mg |
| Zink | 0-10 mg |
| Kupfer | 0-200 mcg |
| Iod | 0-100 mcg |
| Mangan | 0-80 mcg |
| Selen | 0-10 mcg |
| Fluor | 0-13 mcg |
| Vitamin A | 0-500 RE mcg |
| Vitamin D3 | 0-50 mcg |
| Vitamin E | 0-30 mg |
| Vitamin K1 | 0-60 mcg |
| Vitamin C | 0-200 mg |
| Vitamin B1 | 0-200 mcg |
| Vitamin B2 | 0-250 mcg |
| Vitamin B6 | 0-200 mcg |
| Vitamin B12 | 0-20 mcg |
| Niacin | 0-20 mg |
| Panthotensäure | 0-20 mg |
| Folsäure | 0-200 mcg |
| Biotin | 0-50 mcg |
| Taurin | 0-30 mg |
| Cholin | 0-30 mg |
| Inositol | 0-50 mg |
| L-Carnitin | 0-20 mg |
| Nucleotide | 0-30 mg |

7. Verfahren zur Herstellung eines Nahrungsmittels für Patienten mit einer Kuhmilchproteinallergie oder einer Kuhmilchproteinintoleranz, insbesondere für Frühgeborene und/oder termingeborene Säuglinge, **dadurch gekennzeichnet, dass** es die folgenden Schritte umfasst:
- Sammeln von Eselsmilch von verschiedenen landwirtschaftlichen Betrieben;
- chemisch-physikalische Analyse des Rohstoffes;
- Zugabe eines Lipidgemisches, umfassend:
- ein Gemisch von Triclyceriden, die aus pflanzlichen Ölen gewonnen wurden, wobei 40 bis 50% des Gesamtgehalts an Palmitinsäure (C16:0) an Position β (sn-2) in dem Glycerinmolekül verestert werden;
- pflanzliche Öle, die reich an essentiellen Fettsäuren sind;
- langkettige, mehrfach ungesättigte Fettsäuren;
- Behandlung zur Inaktivierung von pathogenen Mikroorganismen;
- Gefriertrocknen oder Sprühtrocknen (wahlweise);
- Verpacken.

8. Verfahren gemäß Anspruch 7, **dadurch gekennzeichnet, dass** die Fettsäurezusammensetzung des Gemisches von Triglyceriden wie folgt ist:
| | |
|---|---|
| C8:0 | 0, 6 - 1,5% |
| C10:0 | 0,7 bis 1,5% |
| C12:0 | 9,5 bis 14% |
| C14:0 | 3 - 5% |
| C16:0 | 21 - 24% |
| C18:0 | 2,5 - 5% |
| C18:1 | 38 - 44% |
| C18:2 | 12 - 15% |
| C18:3 | 1,3 - 1,9% |

9. Verfahren gemäß Anspruch 7, **dadurch gekennzeichnet, dass** in dem Lipidgemisch das Gemisch von Triglyceriden in einem Anteil im Bereich von 40 bis 55% des Gesamtgewichts, bevorzugt in einem Anteil im Bereich von 48 bis 52% des Gesamtgewichts, noch bevorzugter von 50% des Gesamtgewichts vorhanden ist.

10. Verfahren gemäß dem vorhergehenden Anspruch, **dadurch gekennzeichnet, dass** das Lipidgemisch ferner umfasst:
- Sonnenblumenöl mit einem hohen Gehalt an Ölsäure zwischen 13 und 23% des Gesamtgewichts;
- Sonnenblumenöl zwischen 5 bis 15% des Gesamtgewichts;
- Rapsöl zwischen 2 bis 5% des Gesamtgewichts;
- Leinöl zwischen 1 bis 3% des Gesamtgewichts;
- Arachidonsäure zwischen 1 bis 3% des Gesamtgewichts;
- aufbereitetes Fischöl zwischen 0,5 bis 1,5% des Gesamtgewichts;
Mono-/Diglyceride von Fettsäuren zwischen 0,5 bis 1,5% des Gesamtgewichts.

11. Verfahren nach Anspruch 10, **dadurch gekennzeichnet, dass** das Lipidgemisch ferner umfasst:
- Sonnenblumenöl mit einem hohen Gehalt an Ölsäure in einer Menge von 18% bezogen auf das Gesamtgewicht;
- Sonnenblumenöl in einer Menge von 10% bezogen auf das Gesamtgewicht;
- Rapsöl in einer Menge von 3,2% bezogen auf das Gesamtgewicht;
- Leinöl in einer Menge von 2,2% bezogen auf das Gesamtgewicht;
- Arachidonsäure in einer Menge von 1,5% bezogen auf das Gesamtgewicht;
- aufbereitetes Fischöl in einer Menge von 0,9% bezogen auf das Gesamtgewicht;
Mono-/Diglyceride von Fettsäuren in einer Menge von 1% bezogen auf das Gesamtgewicht.

12. Verfahren zur Herstellung eines Nahrungsmittels für Patienten mit einer Kuhmilchproteinallergie oder einer Kuhmilchproteinintoleranz, insbesondere für Frühgeborene und/oder termingeborene Säuglinge, gemäß Anspruch 7 und nachfolgende, **dadurch gekennzeichnet, dass** die Behandlung für die Inaktivierung von pathogenen Mikroorganismen mittels schneller Pasteurisierung oder direkter UHT-Behandlung oder Gefrier- oder Sprühtrocknung oder mittels eines anderen, Fachleuten bekannten Verfahrens durchgeführt wird, das geeignet ist, die Haltbarkeit des Produktes zu verlängern.

## Revendications

1. Produit alimentaire pour des sujets ayant une allergie ou une intolérance aux protéines du lait de vache, en particulier pour des nourrissons prématurés et/ou des nourrissons nés à terme, **caractérisé en ce qu'**il est à base de lait d'ânesse, cru ou lyophilisé, enrichi avec un mélange lipidique comprenant :
- un mélange de triglycérides dérivés d'huiles végétales où 40 à 50% de la teneur totale en acide palmitique (C16:0) est estérifié en position β (sn-2) dans la molécule de glycérol ;
- des huiles végétales riches en acides gras essentiels ;
- des acides gras polyinsaturés à longue chaîne ;
et soumis successivement à un traitement d'inactivation de micro-organismes pathogéniques.

2. Produit alimentaire selon la revendication 1, **caractérisé en ce que** la composition d'acides gras dudit mélange de triglycérides est :
| | |
|---|---|
| C8:0 | 0, 6 - 1,5% |
| C10:0 | 0,7 à 1,5% |
| C12:0 | 9,5 à 14% |
| C14:0 | 3 - 5% |
| C16:0 | 21 - 24% |
| C18:0 | 2,5 - 5% |
| C18:1 | 38 - 44% |
| C18:2 | 12 - 15% |
| C18:3 | 1,3 - 1,9%. |

3. Produit alimentaire selon la revendication 1, **caractérisé en ce que**, dans le mélange lipidique, ledit mélange de triglycérides est présent dans un pourcentage dans la plage de 40 à 55% de poids total, de préférence dans un pourcentage dans la plage de 48 à 52% du poids total, de manière encore davantage préférée de 50% de poids total.

4. Produit alimentaire selon la revendication précédente, **caractérisé en ce que** le mélange lipidique comprend en outre :
- huile de tournesol à forte teneur en acide oléique entre 13 et 23% du poids total ;
- huile de tournesol entre 5 et 15% du poids total ;
- huile de colza entre 2 et 5% du poids total ;
- huile de lin entre 1 et 3% du poids total ;
- acide arachidonique entre 1 et 3% du poids total ;
- huile de poisson raffinée entre 0,5 et 1,5% du poids total ;
- mono/diglycérides d'acides gras entre 0,5 et 1,5% du poids total.

5. Produit alimentaire selon la revendication 3, **caractérisé en ce que** le mélange lipidique comprend en outre :
- huile de tournesol à forte teneur en acide oléique s'élevant à 18% du poids total ;
- huile de tournesol s'élevant à 10% du poids total ;
- huile de colza s'élevant à 3,2% du poids total ;
- huile de lin s'élevant à 2,2% du poids total ;
- acide arachidonique s'élevant à 1,5% du poids total ;
- huile de poisson raffinée s'élevant à 0,9% du poids total ;
- mono/diglycérides d'acides gras s'élevant à 1% du poids total.

6. Produit alimentaire selon la revendication 1, **caractérisé en ce que** sa composition analytique est comme suit :
| | | |
|---|---|---|
| protéines | 0,1-5,0 | g |
| lactoferrine | 0-150 | mg |
| hydrates de carbone | 1,0-10 | g |
| lactose | 0-10 | g |
| maltodextrine | 0-10 | g |
| fructo-oligosaccharides | 0-10 | g |
| graisse | 0,1-10 | g |
| acide linoléique | 60-2000 | mg |
| acide α-linoléique | 0-200 | mg |
| DHA | 0-200 | mg |
| ARA | 0-400 | mg |
| cholestérol | 0-10 | mg |
| sodium | 0-100 | mg |
| potassium | 0-200 | mg |
| calcium | 0-200 | mg |
| magnésium | 0-20 | mg |
| phosphore | 0-120 | mg |
| chlore | 0-150 | mg |
| fer | 0-10 | mg |
| zinc | 0-10 | mg |
| cuivre | 0-200 | µg |
| iode | 0-100 | µg |
| manganèse | 0-80 | |
| sélénium | 0-10 | |
| fluor | 0-30 | |
| vitamine A | 0-500 RE | µg |
| vitamine D3 | 0-50 | µg |
| vitamine E | 0-30 | mg |
| vitamine K1 | 0-60 | µg |
| vitamine C | 0-200 | mg |
| vitamine B1 | 0-200 | µg |
| vitamine B2 | 0-250 | µg |
| vitamine B6 | 0-200 | µg |
| vitamine B12 | 0-20 | µg |
| niacine | 0-20 | mg |
| acide pantothénique | 0-20 | mg |
| acide folique | 0-200 | µg |
| biotine | 0-50 | µg |
| taurine | 0-30 | mg |
| choline | 0-30 | mg |
| inositol | 0-50 | mg |
| L-Carnitine | 0-20 | mg |
| Nucléotides | 0-30 | mg |

7. Procédé pour la production d'un produit alimentaire pour des patients ayant une allergie ou une intolérance aux protéines du lait de vache, en particulier pour des nourrissons prématurés et/ou des nourrissons nés à terme, **caractérisé en ce qu'**il comprend les étapes suivantes :
- la collecte de lait d'ânesse auprès de différentes fermes ;
- l'analyse chimique-physique de la matière première ;
- l'ajout d'un mélange lipidique comprenant :
- un mélange de triglycérides dérivés d'huiles végétales où 40 à 50% de la teneur totale en acide palmitique (C16:0) est estérifié en position β (sn-2) dans la molécule de glycérol ;
- des huiles végétales riches en acides gras essentiels ;
- des acides gras polyinsaturés à longue chaîne ;
- le traitement pour l'inactivation de micro-organismes pathogéniques ;
- la lyophilisation ou le séchage par atomisation (optionnel) ;
- le conditionnement.

8. Procédé selon la revendication 7, **caractérisé en ce que** la composition d'acides gras dudit mélange de triglycérides est :
| | |
|---|---|
| C8:0 | 0, 6 - 1,5% |
| C10:0 | 0,7 à 1,5% |
| C12:0 | 9,5 à 14% |
| C14:0 | 3 - 5% |
| C16:0 | 21 - 24% |
| C18:0 | 2,5 - 5% |
| C18:1 | 38 - 44% |
| C18:2 | 12 - 15% |
| C18:3 | 1,3 - 1,9%. |

9. Procédé selon la revendication 7, **caractérisé en ce que**, dans le mélange lipidique, ledit mélange de triglycérides est présent dans un pourcentage dans la plage de 40 à 55% de poids total, de préférence dans un pourcentage dans la plage de 48 à 52% du poids total, de manière encore davantage préférée de 50% de poids total.

10. Procédé selon la revendication précédente, **caractérisé en ce que** le mélange lipidique comprend en outre :
- huile de tournesol à forte teneur en acide oléique entre 13 et 23% du poids total ;
- huile de tournesol entre 5 et 15% du poids total ;
- huile de colza entre 2 et 5% du poids total ;
- huile de lin entre 1 et 3% du poids total ;
- acide arachidonique entre 1 et 3% du poids total ;
- huile de poisson raffinée entre 0,5 et 1,5% du poids total ;
- mono/diglycérides d'acides gras entre 0,5 et 1,5% du poids total.

11. Procédé selon la revendication 10, **caractérisé en ce que** le mélange lipidique comprend en outre :
- huile de tournesol à forte teneur en acide oléique s'élevant à 18% du poids total ;
- huile de tournesol s'élevant à 10% du poids total ;
- huile de colza s'élevant à 3,2% du poids total ;
- huile de lin s'élevant à 2,2% du poids total ;
- acide arachidonique s'élevant à 1,5% du poids total ;
- huile de poisson raffinée s'élevant à 0,9% du poids total ;
- mono/diglycérides d'acides gras s'élevant à 1% du poids total.

12. Procédé pour la production d'un produit alimentaire pour des patients ayant une allergie ou une intolérance aux protéines du lait de vache, en particulier pour des nourrissons prématurés et/ou des nourrissons nés à terme, selon les revendications 7 et suivantes, **caractérisé en ce que** le traitement pour l'inactivation de micro-organismes pathogéniques est effectué par pasteurisation rapide ou traitement UHT direct ou lyophilisation ou atomisation ou n'importe quel autre procédé connu de l'homme du métier adapté pour prolonger la conservation du produit.
